# EUROPÄISCHE PATENTSCHRIFT

(11) **EP 2 640 624 B1**
(45) Veröffentlichungstag und Bekanntmachung des Hinweises auf die Patenterteilung: **17.12.2014**
(21) Anmeldenummer: 11782406.0
(22) Anmeldetag: 07.11.2011
(51) Int. Cl.: F16C 35/073, F16C 35/077, F16C 19/06, F16C 27/06, F16H 25/20, B62D 5/04

(54) **SERVOLENKUNG, INSBESONDERE FÜR EIN KRAFTFAHRZEUG**
POWER STEERING SYSTEM, IN PARTICULAR FOR A MOTOR VEHICLE
DIRECTION ASSISTÉE, EN PARTICULIER POUR UN VÉHICULE À MOTEUR

(30) Priorität: 19.11.2010 DE 102010044168
(43) Veröffentlichungstag der Anmeldung: 25.09.2013
(73) Patentinhaber: ZF-Lenksysteme GmbH, 73527 Schwäbisch Gmünd (DE)
(72) Erfinder: RUPP, Arthur, 73460 Hüttlingen (DE); TRUTHMANN, Steffen, 39108 Magdeburg (DE)
(86) Internationale Anmeldenummer: PCT/EP2011/069500
(87) Internationale Veröffentlichungsnummer: WO 2012/065868

(56) Entgegenhaltungen:
- WO-A1-2011/154435
- WO-A2-2011/115691
- DE-A1-102004 034 701
- DE-A1-102006 037 479
- DE-A1-102008 041 872
- US-A1- 2011 127 742

## Beschreibung

Die Erfindung betrifft eine Servolenkung, insbesondere für ein Kraftfahrzeug, nach der im Oberbegriff von Anspruch 1 näher definierten Art.

Eine Servolenkung dieser Gattung ist in der EP 2 049 383 B1 beschrieben.

Ähnliche Servolenkungen sind auch aus der DE 103 10 492 A1 und der DE 102 02 483 A1 bekannt.

Des Weiteren offenbart die DE 10 2008 041872 A1 die Präambel des Anspruchs 1.

Bei Servolenkungen dieser Art besteht ein Problem in der Wärmeentwicklung der Lenkung. Durch unterschiedliche Temperaturen zwischen dem Innenring des Radiallagers und dem Außenring bzw. dem Lagersitz und daraus resultierenden unterschiedlichen Ausdehnungen kann es zu Mikrobewegungen kommen. Dies wirkt sich unter anderem negativ auf die Geräuschentwicklung aus. Außerdem kann es dadurch zu Passungsrost kommen.

Der vorliegenden Erfindung liegt die Aufgabe zugrunde, unterschiedliche Temperaturen in dem Radiallager, insbesondere zwischen dem Innenring und dem Außenring zu vermeiden.

Erfindungsgemäß wird diese Aufgabe durch die im kennzeichnenden Teil von Anspruch 1 genannten Merkmale gelöst.

Durch die erfindungsgemäß aufgezeigten Lösungen lassen sich größere Temperaturunterschiede zwischen dem Innenring und dem Außenring vermeiden. Eine der aufgezeigten Lösungen besteht darin, dass durch eine Anordnung des wärmeisolierenden Zwischenelementes - je nach Ausbildung des Getriebes - zwischen dem Getriebegehäuse oder dem Deckel des Getriebegehäuses eine thermische Entkoppelung nach außen erreicht wird. Praktisch wird auf diese Weise weniger Wärme dem Außenring zugeführt und damit eine Durchwärmung des Radiallagers vermieden. Da der Innenring mit der Lenkmutter, die im Allgemeinen eine Kugelmutter ist, verbunden ist, kann über den Innenring aufgrund der großen Masse der Lenkmutter und der damit verbundenen Teile aus dem Radiallager entsprechend Wärme abfließen.

Die zweite Lösung besteht darin, den Innenring durch ein Zwischenelement zwischen der Lenkmutter und dem Innenring thermisch von der Lenkmutter abzukoppeln. Auf diese Weise kommt es bei einem Einfließen von Wärme über den Außenring sehr schnell auch zu einer Durchwärmung des Innenringes, womit ebenfalls Temperaturdifferenzen im Radiallager vermieden werden.

In einer dritten Lösung ist es selbstverständlich auch möglich, sowohl den Außenring als auch den Innenring durch jeweils ein wärmeisolierendes Zwischenelement gegenüber dem jeweils umgebenden Getriebeteil zu entkoppeln.

Das Zwischenelement kann im Wesentlichen als ein- oder zweiteiliges Ringelement ausgebildet sein und als separates Teil oder formschlüssig auf den Außenring außenseitig oder auf den Innenring innenseitig aufgebracht werden.

Eine formschlüssige Verbindung kann z. B. durch ein Aufspritzen von Kunststoffmaterial auf den Innenring bzw. Außenring erfolgen.

Ebenso ist es auch möglich, das Zwischenelement in seitliche Lagerscheiben des Radiallagers zu integrieren.

Radiallager dieser Art sind im Allgemeinen durch seitliche Lagerscheiben abgeschlossen, die sich zwischen dem Außenring und dem Innenring befinden und die ein Austreten von Fett aus dem Radiallager verhindern. Durch eine entsprechende Ausgestaltung der Lagerscheiben mit Verlängerungen, die den Außenring und/oder den Innenring wenigstens teilweise umfassen, lässt sich ebenfalls eine thermische Entkoppelung erreichen.

Eine sehr gute thermische Entkoppelung lässt sich erreichen, wenn in einer erfindungsgemäßen Ausgestaltung vorgesehen ist, dass das Zwischenelement beidseitig den Außenring und/oder den Innenring umfasst und, dass die Umfassung jeweils in zwei auf axialem Abstand voneinander angeordneten Schenkeln endet, wobei der zu dem Außenlager bzw. Innenlager gerichtete Schenkel jeweils an der Lagerscheibe elastisch anliegt.

Durch das elastische Anliegen des Zwischenelementes mit dem Schenkel an der Lagerscheibe wird vermieden, dass auftretende Axialkräfte auf die Lagerscheiben wirken und diese eventuell in nachteiliger Weise deformieren.

Eine weitere sehr vorteilhafte Ausgestaltung der Erfindung kann darin bestehen, dass axial beidseitig das Radiallager abdeckende Deckscheiben jeweils mit einem axialen Wulst versehen sind, der an dem Getriebegehäuse oder dem Deckel anliegt.

Auf diese Weise können axiale Belastungen der Zahnstange ohne Beeinträchtigung des Radiallagers über die beidseitigen Wulste in das Getriebegehäuse oder - je nach Ausbildung des Getriebes - dem Deckel abgeleitet werden.

In einer weiteren Ausgestaltung der Erfindung kann vorgesehen sein, dass das Zwischenelement als zweiteiliges Ringelement ausgebildet ist, wobei die beiden Ringelemente mit einem axialen Abstand nebeneinander liegen.

Bei Auftreten von Belastungen würden sich diese bei einem einteiligen Zwischenelement, das sich über die gesamte axiale Breite des Radiallagers erstreckt, negativ auf das Zwischenelement auswirken. Ist jedoch ein Spalt bzw. ein axialer Abstand vorhanden, der im Bedarfsfalle auch nur sehr gering sein kann, so können z. B. auftretende Belastungen durch den Außenring geführt werden, und zwar ohne dass Kräfte in den anderen Innenring weitergeleitet werden.

Um eine thermische Entkoppelung durch das Zwischenelement zu erreichen, sind verschiedene Materialien denkbar. Eine vorteilhafte Ausgestaltung besteht in der Verwendung von Kunststoff, wie z. B. Polyamid mit Glasfaser und Kohlefaserfüllung, für das Zwischenelement.

Die erfindungsgemäße Servolenkung lässt sich für alle Arten von Servolenkungen in einem Kraftfahrzeug verwenden, wie z. B. eine Servolenkung mit einem achsparallelen Antrieb.

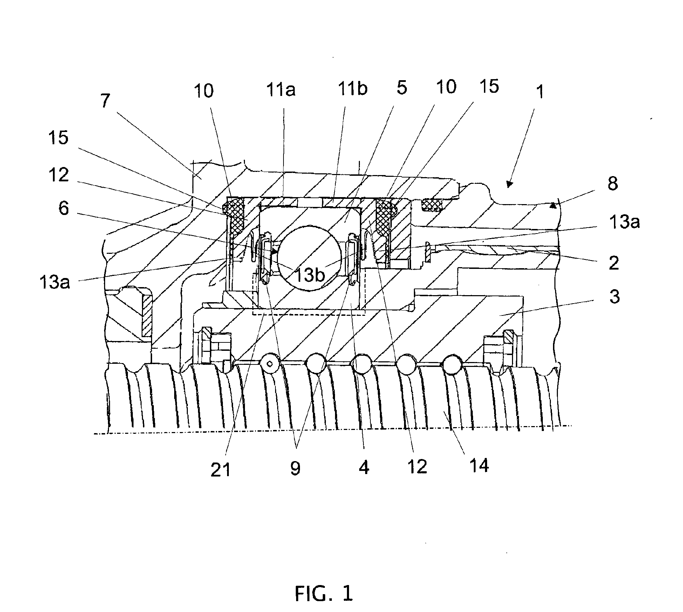

Nachfolgend ist ein Ausführungsbeispiel der Erfindung anhand der Zeichnung prinzipmäßig beschrieben.

Die dargestellte Figur zeigt einen teilweisen Längsschnitt durch eine erfindungsgemäße Servolenkung.

Da Servolenkungen für Kraftfahrzeuge grundsätzlich in ihrer Konstruktion allgemein bekannt sind, wird nachfolgend nur auf die für die Erfindung wesentlichen Teile näher eingegangen. Im Übrigen wird auf die eingangs erwähnten Servolenkungen verwiesen.

Eine Servolenkung 1 nicht näher dargestellten Art, steht über eine Riemenscheibe 2 mit einer Lenkmutter, nämlich einer Kugelmutter 3, in Verbindung. Die Kugelmutter 3 ist radial über einen Innenring 4 und einem Außenring 5 eines Radiallagers 6, das als Rillenkugellager ausgebildet ist, in einem Deckel 7 eines Lenkgetriebegehäuses 8 gelagert. Anstelle einer Lagerung des Radiallagers in dem Deckel 7 ist selbstverständlich auch eine Lagerung in dem Getriebegehäuse 8 selbst möglich.

Das Radiallager 6 ist jeweils seitlich bzw. axial durch Lagerscheiben 9, die zwischen dem Innenring 4 und dem Außenring 5 angeordnet sind, nach außen abgedichtet. Zusätzlich sind seitliche bzw. axiale Deckscheiben 10 aus Elastomer vorgesehen.

Zwischen dem Außenring 5 des Radiallagers 6 und dem Deckel 7 ist ein Zwischenelement in Form eines zweiteiligen Ringelementes 11 a und 11 b angeordnet. Die beiden Ringelemente 11 a und 11 b liegen mit geringem axialen Abstand nebeneinander und sind jeweils mit einer radial sich nach innen erstreckenden Umfassung 12 versehen. Die Umfassung 12 endet radial nach innen gerichtet mit zwei Schenkeln 13a und 13b mit radial dazwischen liegendem Spalt. Durch diese Ausgestaltung wird eine Elastizität erreicht, wodurch insbesondere bei axial auftretenden Kräften der zu der jeweils dazugehörenden Lagerscheibe 9 gerichtete Schenkel 13b elastisch an der Lagerscheibe anliegt.

Die Kugelmutter 3 steht in bekannter Weise mit einem Kugelgewindeabschnitt 14 einer Spindel in Wirkverbindung. Bei einer Rotation der Kugelmutter 3 wird in bekannter Weise das Kugelgewinde 14 und damit auch die Spindel axial verschoben.

Die beiden Deckscheiben 10 sind außenseitig, auf der von dem Radiallager 6 abgewandeten Seite mit einem axialen Wulst 15 versehen. Der Wulst 15 kann als Ringwulst ausgebildet sein und ist in eine ringförmige Ausnehmung des Deckels 7 bzw. des Getriebegehäuses 8 eingedrückt. Auf diese Weise werden von der Spindel bzw. dem Kugelgewinde 14 eingebrachte axiale Kräfte in den Deckel 7 bzw. in das Getriebegehäuse 8 abgeleitet.

Zur thermischen Entkoppelung kann das Zwischenelement, das aus den beiden Ringelementen 11a und 11b gebildet ist, aus Polyamid mit Glasfaser und Kohlefaserfüllung bestehen. Dabei kann der Anteil z. B. der Füllungen 20 % Glasfaserfüllung und 15 % Kohlefaserfüllung betragen.

Anstelle eines Zwischenelementes zwischen dem Außenring 5 und dem Deckel 7 kann zusätzlich oder an dessen Stelle ein Zwischenelement 21 zur thermischen Entkoppelung zwischen dem Innenring 4 und der Kugelmutter 3 angeordnet sein (siehe gestrichelte Darstellung in der Figur).

### Bezugszeichenliste

- 1: Servolenkung
- 2: Riemenscheibe
- 3: Lenkmutter
- 4: Innenlager
- 5: Außenlager
- 6: Radiallager
- 7: Deckel
- 8: Lenkgetriebegehäuse
- 9: Lagerscheiben
- 10: Deckscheiben
- 11a,11b: Zwischenelement/Ringelement
- 12: Umfassung
- 13a,13b: Schenkel
- 14: Kugelgewinde
- 15: Wulst
- 21: Zwischenelement

## Patentansprüche

1. Servolenkung (1), insbesondere für ein Kraftfahrzeug, mit einem Servomotor, der ein axial verlagerbares Bauelement über eine in einem Getriebegehäuse (8) drehbar, aber axial unverschiebbar gelagerte Lenkmutter (3) antreibt, wobei die Lenkmutter (3) in einem Radiallager (6) mit einem Innenring (4) und mit einem Außenring (5) in dem Getriebegehäuse (8) gelagert ist, wobei zwischen dem Außenring (5) des Radiallagers (6) und dem Getriebegehäuse (8) oder einem Deckel (7) des Getriebegehäuses (8) und/oder zwischen dem Innenring (4) des Radiallagers (6) und der Lenkmutter (3) zur thermischen Entkoppelung ein wärmeisolierendes Zwischenelement (11a,11b, 21) angeordnet ist. **dadurch gekennzeichnet, dass** das Zwischenelement (11 a, 11 b, 21) mit einer Umfassung (12) versehen ist, die jeweils in zwei auf axialem Abstand voneinander angeordneten Schenkeln (13a, 13b) endet, wobei der zu dem Außenring (5) bzw. Innenring (4) gerichtete Schenkel jeweils an der Lagerscheibe (9) elastisch anliegt.

2. Servolenkung nach Anspruch 1, **dadurch gekennzeichnet, dass** das Zwischenelement im Wesentlichen als ein- oder zweiteiliges Ringelement (11 a, 11 b, 21) ausgebildet ist.

3. Servolenkung nach Anspruch 1 oder 2, **dadurch gekennzeichnet, dass** das Zwischenelement (11a,11b,21) formschlüssig auf den Außenring (5) und/oder Innenring (4) aufgebracht ist.

4. Servolenkung nach Anspruch 1 oder 2, **dadurch gekennzeichnet, dass** das Zwischenelement (11a,11b,21) in seitlichen Lagerscheiben (9) des Radiallagers (6) integriert sind.

5. Servolenkung nach einem der Ansprüche 1 bis 4, **dadurch gekennzeichnet, dass** das Zwischenelement (11 a, 11 b, 21) beidseitig den Außenring (5) und/oder den Innenring (4) umfasst.

6. Servolenkung nach einem der Ansprüche 1 bis 5, **dadurch gekennzeichnet, dass** axial beidseitig das Radiallager (6) abdeckende Deckscheiben (10) jeweils mit einem axialen Wulst (15) versehen sind, der an dem Getriebegehäuse (8) oder dem Deckel (7) anliegt.

7. Servolenkung nach Anspruch 2, **dadurch gekennzeichnet, dass** das Zwischenelement als zweiteiliges Ringelement (11a,11b,21) ausgebildet ist, wobei die beiden Ringelemente (11a,11b,21) mit einem axialen Abstand nebeneinander liegen.

8. Servolenkung nach einem der Ansprüche 1 bis 7, **dadurch gekennzeichnet, dass** das Zwischenelement (11a,11b,21) aus Kunststoff besteht.

9. Servolenkung nach einem der Ansprüche 1 bis 7, **dadurch gekennzeichnet, dass** als Kunststoff Polyamid mit Glasfaser- und Kohlefaserfüllung vorgesehen ist.

10. Servolenkung nach einem der Ansprüche 1 bis 9, **dadurch gekennzeichnet, dass** die Servolenkung (1) mit einem achsparallelem Antrieb versehen ist.

## Claims

1. A power steering system (1), in particular for a motor vehicle, comprising a servomotor, which drives an axially displaceable component by way of a steering nut (3) that is mounted rotatably, but axially non-displaceably in a gear housing (8), wherein the steering nut (3) is mounted in the gear housing (8) in a radial bearing (6) comprising an inner ring (4) and an outer ring (5), wherein a heat-insulating intermediate element (11a, 11b, 21) is disposed between the outer ring (5) of the radial bearing (6) and the gear housing (8), or a cover (7) of the gear housing (8), and/or between the inner ring (4) of the radial bearing (6) and the steering nut (3) for the purpose of thermal decoupling, wherein the intermediate element (11a, 11b, 21) is provided with an enclosure (12), which ends in each case in two limbs (13a, 13b) that are arranged at an axial distance from each other, wherein the limb that is directed toward the outer ring (5) or inner ring (4) is elastically seated against the respective bearing washer (9).

2. The power steering system according to claim 1, wherein the intermediate element is substantially designed as a one- or two-piece annular element (11a, 11b, 21).

3. The power steering system according to claim 1 or 2, wherein the intermediate element (11a, 11b, 21) is positively applied to the outer ring (5) and/or inner ring (4).

4. The power steering system according to claim 1 or 2, wherein the intermediate element (11a, 11b, 21) is integrated in lateral bearing washers (9) of the radial bearing (6).

5. The power steering system according to one of claims 1 to 4, wherein the intermediate element (11a, 11b, 21) encloses the outer ring (5) and/or inner ring (4) on both sides.

6. The power steering system according to one of claims 1 to 5, wherein cover disks (10) that cover the radial bearing (6) are provided axially on both sides with a respective axial bead (15), which is seated against the gear housing (8) or the cover (7).

7. The power steering system according to claim 2, wherein the intermediate element is designed as a two-piece annular element (11a, 11b, 21), wherein the two annular elements (11a, 11b, 21) are located at an axial distance next to each other.

8. The power steering system according to one of claims 1 to 7, wherein the intermediate element (11a, 11b, 21) is made of plastic material.

9. The power steering system according to one of claims 1 to 7, wherein polyamide comprising glass fiber and carbon fiber filling is provided as the plastic material.

10. The power steering system according to one of claims 1 to 9, wherein the power steering system (1) is provided with an axially parallel drive.

## Revendications

1. Direction assistée (1), en particulier pour un véhicule automobile, comprenant un servomoteur qui entraîne une pièce déplaçable axialement par le biais d'un écrou de direction (3) monté de manière rotative dans un boîtier de transmission (8) mais de manière non déplaçable axialement, l'écrou de direction (3) étant monté dans le boîtier de transmission (8) dans un palier radial (6) comprenant une bague intérieure (4) et comprenant une bague extérieure (5), un élément intermédiaire thermo-isolant (11a, 11b, 21) étant disposé, en vue du découplage thermique, entre la bague extérieure (5) du palier radial (6) et le boîtier de transmission (8) ou un couvercle (7) du boîtier de transmission (8) et/ou entre la bague intérieure (4) du palier radial (6) et l'écrou de direction (3), **caractérisée en ce que** l'élément intermédiaire (11a, 11b, 21) est pourvu d'une enceinte (12) qui se termine respectivement par deux branches (13a, 13b) disposées à une distance axiale l'une de l'autre, la branche orientée en direction de la bague extérieure (5) ou de la bague intérieure (4) s'appliquant respectivement élastiquement contre le disque de palier (9).

2. Direction assistée selon la revendication 1, **caractérisée en ce que** l'élément intermédiaire est réalisé essentiellement sous forme d'élément annulaire (11a, 11b, 21) en une ou deux parties.

3. Direction assistée selon la revendication 1 ou 2, **caractérisée en ce que** l'élément intermédiaire (11a, 11b, 21) est appliqué avec complémentarité de formes sur la bague extérieure (5) et/ou la bague intérieure (4).

4. Direction assistée selon la revendication 1 ou 2, **caractérisée en ce que** l'élément intermédiaire (11a, 11b, 21) est intégré dans des disques de palier latéraux (9) du palier radial (6).

5. Direction assistée selon l'une quelconque des revendications 1 à 4, **caractérisée en ce que** l'élément intermédiaire (11a, 11b, 21) entoure la bague extérieure (5) et/ou la bague intérieure (4) des deux côtés.

6. Direction assistée selon l'une quelconque des revendications 1 à 5, **caractérisée en ce que** des disques de recouvrement (10) recouvrant le palier radial (6) axialement des deux côtés sont respectivement pourvus d'un bourrelet axial (15) qui s'applique contre le boîtier de transmission (8) ou le couvercle (7).

7. Direction assistée selon la revendication 2, **caractérisée en ce que** l'élément intermédiaire est réalisé sous forme d'élément annulaire (11a, 11b, 21) en deux parties, les deux éléments annulaires (11a, 11b, 21) étant situés l'un à côté de l'autre à une distance axiale.

8. Direction assistée selon l'une quelconque des revendications 1 à 7, **caractérisée en ce que** l'élément intermédiaire (11a, 11b, 21) est constitué de plastique.

9. Direction assistée selon l'une quelconque des revendications 1 à 7, **caractérisée en ce qu'**en tant que plastique il est prévu du polyamide chargé de fibres de verre et de fibres de carbone.

10. Direction assistée selon l'une quelconque des revendications 1 à 9, **caractérisée en ce que** la direction assistée (1) est pourvue d'un entraînement à axes parallèles.
